# EUROPEAN PATENT APPLICATION

(11) **EP 4 696 452 A2**
(43) Date of publication of application: **18.02.2026**
(21) Application number: 25195038.2
(22) Date of filing: 11.08.2025
(51) Int. Cl.: B23P 15/00, F16K 31/22, F24F 6/10, F24F 13/20

(54) **MANUFACTURING METHOD OF WATER TANK**

(30) Priority: 12.08.2024 KR 20240107356
(71) Applicant: LG Electronics Inc., Yeongdeungpo-gu Seoul 07336 (KR)
(72) Inventor: Ku, Myungjin, Seoul (KR); Keum, Kyoha, Seoul (KR); Lee, Kunyoung, Seoul (KR); Lee, Donggun, Seoul (KR); Jeon, Jihye, Seoul (KR)
(74) Representative: Vossius & Partner Patentanwälte Rechtsanwälte mbB

(57) **Abstract**

Disclosed is a method for manufacturing a water tank□(100).

The method for manufacturing the water tank according to the present disclosure includes: producing an upper cylinder□(104) of a water tank; producing a lower cap□(105) of the water tank; welding the upper cylinder and the lower cap; a first polishing step using sandpaper having a first grit range; and a second polishing step using sandpaper having a second grit range larger than the first grit range.

## Description

### BACKGROUND OF THE INVENTION

### 1. Field of the invention

The present disclosure relates to a manufacturing method of a water tank, and more particularly, to a manufacturing method of a water tank made of stainless steel used in a humidifier.

### 2. Description of the Related Art

A humidifier is a device that generates humidified air using water. In order to increase an operating time of the humidifier, it is necessary to increase a size of a water tank in which water is held.

When the size of the water tank increases, a weight of the water tank may cause a problem in that transportation by a user is difficult. In addition, when the water tank is dropped during a transportation process of the water tank, if a shape of the water tank is easily deformed or damaged, there may be a problem in that the water tank cannot be mounted inside the humidifier.

In order to increase the size of the water tank, a vertical length of the water tank can be increased. A scheme of manufacturing the water tank can adopt a deep-dining scheme. However, in such a deep-dining scheme, when the vertical length of the water tank is formed to be long, there is a problem in that a thickness of the water tank cannot be kept constant.

In addition, the water tank should not be easily corroded since water is held therein.

Korean Patent Registration No. KR 10-2667526 B1 discloses a water tank used in a humidifier, but does not disclose a specific method of manufacturing the water tank.

### SUMMARY OF THE INVENTION

The present disclosure has been made in view of the above problems, and it is an object of the present disclosure to solve the above-described problems and other problems.

Another object is to provide a method for manufacturing a water tank having a constant thickness.

Yet another object is to provide a method for manufacturing a water tank having improved corrosion resistance.

Still yet another object is to provide a method for manufacturing a water tank in which a strength is ensured.

These objects are achieved with a method as defined in independent claim 1. Preferred aspects are defined in the dependent claims.

In order to achieve the object, a method for manufacturing a water tank according to an embodiment of the present disclosure includes: producing an upper cylinder of a water tank; producing a lower cap of the water tank; welding the upper cylinder and the lower cap; a first polishing step using sandpaper having a first grit range; and a second polishing step using sandpaper having a second grit range larger than the first grit range.

The water tank is formed of stainless steel.

The first polishing step uses sandpaper having a grit size in the range of 100 to 150.

The first polishing step comprises changing the sandpaper in a direction of increasing grit size.

The first polishing step comprises removing the bead from welding portion of the upper cylinder and the lower cap.

In the second polishing step comprises changing the sandpaper in a direction of increasing grit size.

The second polishing step uses sandpaper with a grit size of 150 to 240.

In the method for manufacturing a water tank, the second polishing step further includes a polishing process of using fine sandpaper of 600 grit or more.

The method for manufacturing a water tank further includes an electrolyte polishing step of immersing the water tank in an electrolyte solution and allowing current to flow in the electrolyte solution after the second polishing step.

The method for manufacturing a water tank further includes a hairline polishing step of forming fine stripes on a surface of the water tank, after the electrolyte polishing step.

The method for manufacturing a water tank further includes a first processing step of expanding the upper cylinder part, and cutting an upper end portion of the upper cylinder, after the welding of the upper cylinder and the lower cap.

The method for manufacturing a water tank further includes a second processing step of adding a bead shape for reinforcing a strength to the upper end portion of the upper cylinder, after the first polishing step.

The producing of the lower cap includes a process of forming the bottom surface of the lower cap.

A length of the upper cylinder is formed to be greater than a diameter of the lower cap.

In the producing of the upper cylinder comprises rolling a stainless steel plate into a cylindrical pipe, and welding butted portions.

Specific details of other embodiments are included in the detailed description and drawings.

According to the manufacturing method of the water tank according to the present disclosure, there are one or more following effects.

First, there is an advantage that a thickness of the water tank can be kept constant by separately manufacturing an upper part and a lower part of the water tank and welding the upper part and the lower part.

Second, there is also an advantage of providing a water tank in which corrosion resistance is secured through a plurality of polishing processes and electrolytic polishing in a manufacturing process of the water tank.

Third, there is also an advantage of providing a water tank in which a strength is secured in a form of a forming structure on a bottom surface of the water tank and a separate shape on an upper structure.

The effects of the present disclosure are not limited to the above-mentioned effects, and other effects that are not mentioned may be obviously understood by those skilled in the art from the claims.

### BRIEF DESCRIPTION OF THE DRAWINGS

FIG. 1 is a perspective view of a humidifier according to an embodiment of the present disclosure.
FIG. 2 is a plan view of FIG. 1.
FIG. 3 is a cross-sectional view taken along line III-III' of FIG. 2.
FIG. 4 is an exploded perspective view of an inner reservoir and an outer reservoir according to an embodiment of the present disclosure.
FIG. 5 is a perspective view of the inner reservoir according to an embodiment of the present disclosure.
FIG. 6 is a flowchart of a manufacturing method of an inner reservoir according to an embodiment of the present disclosure.

### DETAILED DESCRIPTION OF THE PREFERRED EMBODIMENTS

Advantages and features of the present disclosure and methods of achieving them will become apparent with reference to the embodiments described below in detail in conjunction with the accompanying drawings. However, the present disclosure is not limited to the embodiments disclosed below, but may be implemented in various different forms, and these embodiments are provided only to allow the disclosure of the present disclosure to be complete, and to completely inform those of ordinary skill in the art to which the present disclosure belongs, the scope of the invention, and the present disclosure is only defined by the scope of the claims. Like reference numerals refer to like elements throughout the specification.

Hereinafter, the present disclosure will be described with reference to drawings for describing a method for manufacturing a humidifier and an inner reservoir (or 'water tank') according to embodiments of the present disclosure.

The humidifier of the present disclosure may generate humidified air by ultrasonic vibration of water. The humidifier of the present disclosure may generate humidified air by heating water. The humidifier of the present disclosure may generate humidified air generated by ultrasonic vibration and humidified air generated by heating.

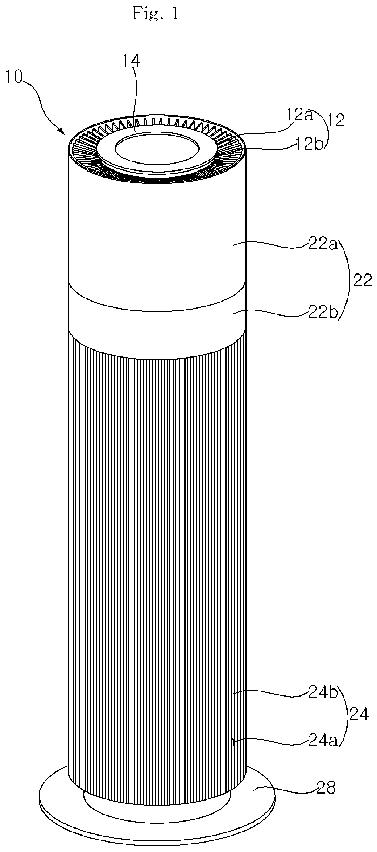

Referring to FIG. 1, an exterior of the humidifier of the present disclosure is described.

The humidifier includes a casing 10 that forms the appearance, and has an inlet 24a and an outlet 12a.

The casing 10 may have a generally cylindrical shape.

The casing 10 may include an intake grille 24 that forms the inlet 24a through which air enters, and a discharge grille 12 that forms the outlet 12a through which air is discharged. The inlet 24a may be formed on a peripheral surface of the casing 10 having the cylindrical shape. The outlet 12a may be formed on a top surface of the casing 10 having the cylindrical shape. The humidifier of the present disclosure may allow air into be admitted through the peripheral surface and be discharged through the top surface.

The intake grille 24 includes a plurality of grilles 24b that extend vertically. The plurality of grilles 24b may be spaced apart in a circumferential direction of the intake grille 24. A plurality of inlets 24a may be formed between the plurality of grilles 24b.

The casing 10 may include a water tank cover 14 placed on a top of a water tank 100.

The humidifier may include a discharge grille 12 that forms the outlet 12a and a water tank cover 14 which is placed on the top of the water tank 100.

The discharge grille 12 may be configured to be separated upward from an outer shell 22 to be described later. The water tank cover 14 may be configured to be separated from the discharge grille 12 or from the water tank 100 to be described later.

The discharge grille 12 may include a plurality of ribs 12b that extend radially from the outer periphery of the water tank cover 14. The plurality of ribs 12b placed at the discharge grille 12 may be spaced apart circumferentially from the outer periphery of the water tank cover 14.

The casing 10 may include the outer shell 22 that guides air moving therein to the outlet 12a.

The outer shell 22 includes an upper outer shell 22a placed under the discharge grille 12 and a lower outer shell 22b placed under the upper outer shell 22a. The lower outer shell 22b may be made of a transparent material.

The humidifier may include a base 28 placed under the casing 10, which causes the casing 10 to be spaced a certain distance apart from the ground. An upper end of the base 28 may be connected to a lower end of the casing 10.

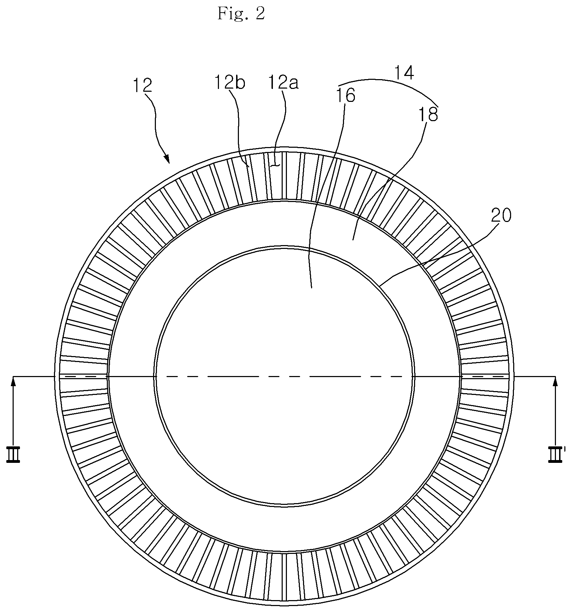

Hereinafter, a top portion of the humidifier will be described with reference to FIG. 2.

The water tank cover 14 may include a central cover 16 and a peripheral cover 18 placed around the central cover 16. The central cover 16 may bulge upward toward the center. A water supply hole 20 may be formed between the peripheral cover 18 and the central cover 16 to allow water to move into the water tank 100.

A plurality of outlets 12a may be placed between the plurality of ribs 12b formed at the discharge grille 12.

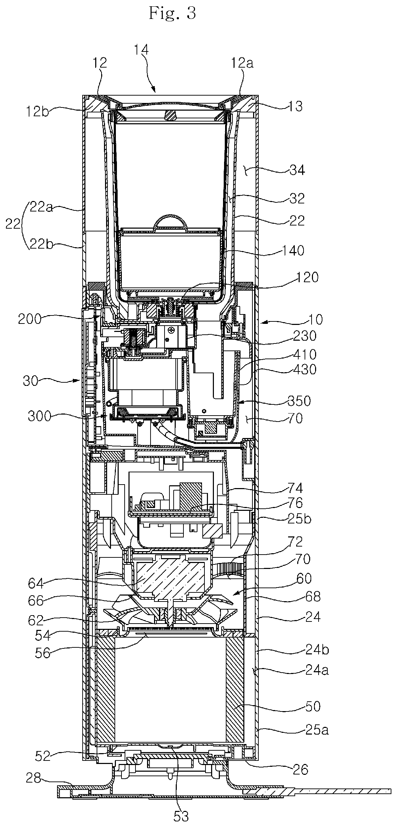

Hereinafter, an internal construction of the humidifier will be described with reference to FIG. 3.

The humidifier includes a filter unit placed inside the casing 10, for filtering the air admitted into the inlets 24a. The humidifier includes a blower 60 placed inside the casing 10, for moving the air inside the casing 10 from the inlets 24a to the outlets 12a. The humidifier includes a water tank 100 placed inside the casing 10, for holding water. The humidifier includes a humidification module that generates humidified air from water supplied from the water tank 100.

The humidifier may include a base 28. The base 28 may cause the casing 10 to be spaced upward from the ground. The base 28 may be connected to a bottom wall 26 of the casing 10.

The casing 10 may include a bottom wall 26 which covers the bottom of the intake grille 24.

An upper end portion of the base 28 may be connected to the bottom wall 26. The bottom wall 26 may be placed in such a way as to cover a bottom surface of the humidifier which is spaced upward from the ground by the base 28.

The intake grille 24 may cover the outsides of a filter 50 and a blower housing 68 to be described below. The intake grille 24 may have a plurality of inlets 24a that are vertically formed and circumferentially spaced apart. The inlets 24a may be formed around where the filter 50 is placed. The inlets 24a may be formed in a lower portion of the intake grille 24. The lower portion of the intake grille 24 may be formed with inlets 24a, and a top portion of the intake grille 24 may be enclosed to protect the internal construction of the humidifier.

The outer shell 22 may be placed over the intake grille 24.

The filter unit may allow the air admitted through the inlets 24a to be filtered through the filter 50. The filter unit may allow the filtered air to move upward.

The filter unit includes a filter 50 for filtering the air admitted through the inlets 24a and a filter mounting portion for fixing the filter 50 in place inside the casing 10.

The filter 50 may have the cylindrical shape. Accordingly, the filter 50 is able to filter air drawn in from longitudinal and lateral directions perpendicular to the vertical direction. The air admitted through the inlets 24a may move to an inside space of the filter 50. The air passed through the filter 50 may move to the blower 60 placed over the filter 50.

The filter mounting portion includes a lower plate 52 placed on a lower side of the filter 50, an upper plate 54 placed on an upper side of the filter 50, and a supporter (not illustrated) connecting the lower plate 52 and the upper plate 54.

The lower plate 52 is placed on a lower side of the filter 50. The lower plate 52 may move up and down and detect whether the filter 50 is placed. A fan sterilizer 53 may be placed in the center of the lower plate 52 to emit ultraviolet light upward.

The fan sterilizer 53 may sterilize a blower fan 62 to be described below or the inside of the filter 50.

An orifice 56 is formed in the upper plate 54. The orifice 56 may be formed in the center of the upper plate 54. The orifice 56 may allow the air admitted to the inside of the filter 50 to move to the blower fan 62. An inner circumferential end of the upper plate 54 may be bent upward so as to guide the upward movement of air in the inside space of the filter 50 to the blower fan 62.

The supporter 58 may connect the lower plate 52 and the upper plate 54. The supporter 58 may be circumferentially spaced apart.

The blower 60 includes a blower fan 62 that forms an air flow within the casing 10 and a fan motor 64 that rotates the blower fan 62.

The blower fan 62 may have a fan intake opening on one side facing the orifice 56 and a fan discharge opening on the opposite side of the fan intake opening. The blower fan 62 may be a diagonal flow fan in which the fan discharge opening on the opposite side of the fan intake opening faces in a centrifugal direction. The blower fan 62 may include a hub connected to the fan motor 64, a shroud spaced apart from the hub by a certain distance and forming the fan intake opening, and a blade extending radially to connect the hub and the shroud.

The blower fan 62 may be activated to send air upward from below. The blower fan 62 may draw air toward the orifice 56 and discharge air to the blower housing 68 where a diffuser 72 is placed.

The fan motor 64 may be placed over the blower fan 62.

The blower includes a motor cover 66 that covers the outside of the fan motor 64, and a blower housing 68 spaced radially outward from the motor cover 66, that guides the upward movement of air blown by the blower fan 62.

A blower channel 70 through which the air moving by the blower fan 62 moves upward may be formed between the motor cover 66 and the blower housing 68. The outer reservoir 70 may extend to a region where a humidification module housing 410 and a channel housing 430 are formed.

The intake grille 24 may be placed on the outside of the blower housing 68.

The blower 60 includes a diffuser 72 placed between the motor cover 66 and the blower housing 68, that reduces rotational components of the air blown upward by the blower fan 62.. A plurality of diffusers 72 may be circumferentially spaced apart.

A control box 74 forming a space within which a circuit board 76 is placed may be placed over the motor cover 66. The control box 74 may be spaced apart inwardly from the blower housing 68. Accordingly, the blower channel 70 may be formed in the space between the control box 74 and the blower housing 68 as well.

A plurality of circuit boards 76 may be placed within the control box 74. The humidification module includes a first humidification reservoir 300 which heats water. The humidification module includes a second humidification reservoir 350 which generates humidified air from water. The humidification module may include the humidification module housing 410 that covers peripheries of a first humidification water tank 300 and a second humidification water tank 350. The channel housing 430 may be placed on an outer periphery of the humidification module housing 410. The blower channel 70 may be formed between the humidification module housing 410 and the channel housing 430.

The humidifier includes a water tank 100 forming a space in which water is held, an inner shell 180 forming a space in which the water tank 100 is placed, and a middle tray 200 placed under the inner shell 180.

The water tank 100 may have an inner reservoir 102 is placed inside an outer reservoir 160. Accordingly, a connector 120 may be placed in a through-hole 164 of the outer reservoir 160.

The outer reservoir 160, while placed inside the inner shell 180, may be placed over the middle tray 200. The middle tray 200 may be a structure that supports the outer reservoir 160 and the inner reservoir 102. Thus, the weights of the inner reservoir 102, the outer reservoir 160, and the inner shell 180 may be transferred to the middle tray 200.

The outer reservoir 160 is placed on the outer periphery of the inner reservoir 10.

The inner reservoir 102 may be placed inside the outer reservoir 160. When the inner reservoir 102 is placed inside the outer reservoir 160, an outer peripheral surface of the inner reservoir 102 may be placed in such a way as to make contact with an inner peripheral surface of the outer reservoir 160.

The humidifier includes a water softener 140 placed within the inner reservoir 102.

The water softener 140 is placed inside the inner reservoir 102. The water softener 140 may be fixed in place as it is connected to the connector 120 placed inside the inner reservoir 102.

The inner shell 180 is placed to be spaced apart from the outer reservoir 160.. The inner shell 180 is placed to be spaced apart from the water tank 100. A first discharge passage 32 along which humidified air moves is formed between the inner shell 180 and the outer reservoir 160.

A second discharge passage 34 is formed between the outer shell 22 and the inner shell 180.

The inner shell 180 and the outer shell 22 are placed to be spaced apart from each other and form the second discharge passage 34. Filtered clean air blown by the blower 60 may move along the second discharge passage 34.

The discharge grille 12 may be placed over the first discharge passage 32 and the second discharge passage 34 which will be described below.

The discharge grille 12 may have a vertically constant height. Thus, a mixture passage 13 may be formed between the plurality of ribs 12b of the discharge grille 12. In the mixture passage 13, the air moving through the first discharge passage 32 and the air moving through the second discharge passage 34 may be mixed together.

Each of the plurality of ribs 12b is formed in such a way that an outer peripheral end is placed higher than an inner peripheral end. Thus, the air moving through the first discharge passage 32 and the second discharge passage 34 may be guided radially inwardly.

A display 30 is placed at one side of the casing 10. The display 30 may allow a user to adjust a power or an operation of the humidifier. A display for displaying an operation state of the humidifier to the user may be placed in the display 30.

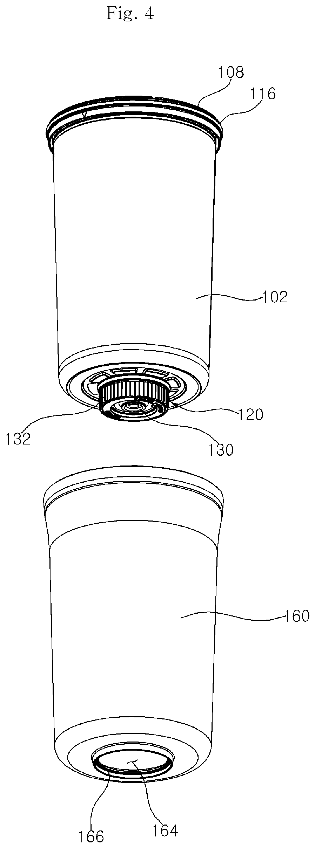

The inner reservoir, the outer reservoir, and the connector will be described with reference to FIG. 4.

The water tank 100 includes an inner reservoir 102, and an outer reservoir 160 placed outside the inner reservoir. The inner reservoir 102 has a space in which water is held therein. The outer reservoir 160 has a space for accommodating the inner reservoir 102 therein.

A water tank sealer 115 is placed at an upper end portion of the inner reservoir 102. The water tank sealer 115 is placed on an outer peripheral surface of the inner reservoir 102 and placed to be in contact with an inner peripheral surface of the outer reservoir 160.

A through-hole 164 through which the connector 120 passes is formed on a bottom surface of the outer reservoir 160.

The outer reservoir 160 includes a lower rim 166 protruding downward on the bottom surface. The lower rim 166 has a structure of protruding downward on a periphery of the through-hole 164. The lower rim 166 may have a ring-shaped structure.

The inner reservoir 102 has a space in which water is held. A handle 108 is placed at a top portion of the inner reservoir 102.

The humidifier includes a connector 120 that is fixedly placed in the inner reservoir 102, and connects the inner reservoir 102 and a supply tube 230. Some components of the connector 120 are placed inside the inner reservoir 102. The remaining components of the connector 120 are placed outside the inner reservoir 102.

The connector 120 may send the water held in the inner reservoir 102 to the humidification module. The connector 120 may send the water held in the inner reservoir 102 to the humidification module through the supply tube 230.

A connector holder 132 of the connector 120, and a part of a connector valve 130 may be placed outside the inner reservoir 102. Each of the connector holder 132 and the connector valve 130 may be connected to an inlet port 232 of the supply tube 230.

The connector holder 132, and a part of the connector valve 130 may protrude to a lower side of the outer reservoir 160 through the through-hole 164 of the outer reservoir 160.

When the inner reservoir 102 is accommodated in the outer reservoir 160, the connector holder 132 and a part of the connector valve 130 may be placed at the lower side of the outer reservoir 160.

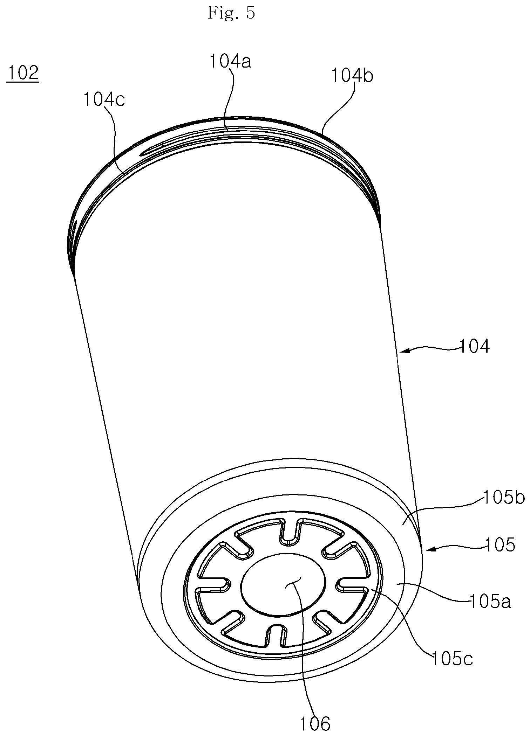

The inner reservoir will be described with reference to FIG. 5.

The inner reservoir 102 includes an upper cylinder 104 extending in a vertical direction, and a lower cap 105 connected to a bottom portion of the upper cylinder 104.

The upper cylinder 104 and the lower cap 105 may be coupled to each other by welding. The upper cylinder 104 may be formed to be longer than the lower cap 105 in the vertical direction. A bottom hole 106 may be formed on a bottom surface of the lower cap 105.

The upper cylinder 104 may be formed in a cylindrical shape opened in the vertical direction.. The upper cylinder 104 may be formed in a structure in which an inner diameter increases toward an upper side. A coupling groove 104a formed to be coupled to the handle 108 is formed at an upper end portion of the upper cylinder 104.

A flange 104b which protrudes outward may be formed on an upper end of the upper cylinder 104.

A bead shape 104c in which a groove that is recessed inward is formed may be formed at the upper end portion of the upper cylinder 104.

The coupling groove 104a is formed between the flange 104b and the bead shape 104c.

A forming 105c that is recessed upward or downward for strength reinforcement may be formed on the bottom surface of the lower cap 105. The lower cap 105 includes a bottom surface 105a on which the bottom hole 106 is formed, and a bending surface 105b that is bent toward the upper cylinder 104. An upper end portion of the bending surface 105b is coupled to the upper cylinder 104.

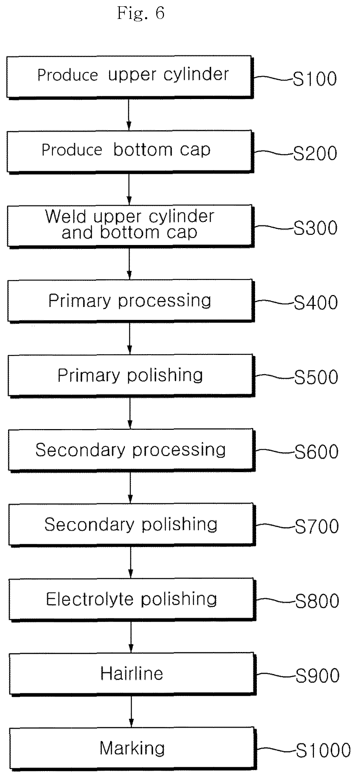

A manufacturing method of the inner reservoir will be described with reference to FIG. 6.

The inner reservoir 102 may be made of stainless steel.

In the inner reservoir 102, the upper cylinder 104 and the lower cap 105 are separately manufactured, and then connected to each other.

A step S100 of producing the upper cylinder 104 may be performed.

In the step S100 of producing the upper cylinder 104, the upper cylinder 104 may be manufactured by rolling a stainless steel plate into a cylindrical pipe and welding butted portions.

That is, the upper cylinder may be manufactured through a pipe rolling process and a linear welding process. The upper cylinder 104 manufactured in the step S100 of producing the upper cylinder 104 may have a cylindrical shape opened in the vertical direction. In this case, inner diameters of a top portion and a bottom portion of the upper cylinder 104 may be the same.

Step S200 of producing the lower cap 105 may be performed.

The lower cap 105 is formed in a structure in which the bottom surface 105a and the bending surface 105b are formed. The lower cap 105 may be manufactured in a deep-dining scheme.

In the step S200 of producing the lower cap 105, the bottom surface 105a of the lower cap 105 may be formed.

Step S300 of welding the upper cylinder 104 and the lower cap 105 is performed.

The upper cylinder 104 and the lower cap 105 are welded to each other in a state in which a lower end portion of the upper cylinder 104 and an upper end portion of the lower cap 105 are butted. That is, the upper cylinder 104 and the lower cap 105 may be connected in a butt welding scheme.

Hereinafter, a state in which the upper cylinder 104 and the lower cap 105 are welded will be described as the inner reservoir 102.

Thereafter, a step of processing or polishing the inner reservoir is performed.

Then, a first processing step S400 is performed.

In the first processing step S400, an upper cylinder 104 part may be expanded. That is, the upper cylinder 104 may be expanded so that the internal diameter increases from the bottom to the top. That is, a slope shape may be added to an inner peripheral surface of the upper cylinder 104.

In the first processing step S400, the upper end portion of the upper cylinder 104 may be cut. That is, the upper end portion may be cut so as to match a length of a region where the upper cylinder 104 is formed.

In addition, in the first processing step S400, the upper end portion of the upper cylinder 104 may be crimped so that the flange 104b formed at the upper end portion is formed.

Then, a first polishing step S500 is performed.

In the first polishing step S500, the bead may be removed from a butt welding portion. In addition, in the first polishing step S500, a surface of an exterior of the inner reservoir 102 may be planarized.

In the first polishing step S500, sandpaper in a first grit range may be used. The sandpaper in the first grit range may be sandpaper having a grit of 100 to 150.

In the first polishing step S500, the sandpaper may be changed so that the grit of the sandpaper increases.

As an embodiment, in an initial stage of the first polishing step S500, sandpaper having a grit of 120 may be used, and in a latter stage of S500, sandpaper having a grit of 150 may be used.

Then, a second processing step S600 is performed.

In the second processing step S600, processing of forming the coupling groove 104a at the upper end portion of the upper cylinder 104 coupled to the handle 108 is performed.

In the second processing step S600, processing of adding the bead shape 104c to the upper end portion of the upper cylinder 104 is performed. The bead shape 104c may reinforce a strength of the inner reservoir 102.

In the second processing step S600, a chamfering process of smoothing an end portion of the flange 104b may be performed.

Then, a second polishing step S700 is performed.

In the second polishing step S700, sandpaper having a larger grit than that in the first polishing step S500 may be used.

In the second polishing step S700, sandpaper in a second grit range may be used. The second grit range may be larger than the first grit range. The sandpaper in the second grit range may be sandpaper of 150 grit or more.

In the second polishing step S700, a polishing task may be performed by using sandpaper having a grit of 150 to 240. Further, the second polishing step S700 may include a polishing process using fine sandpaper having a grit of 600 or more.

The second polishing step S700 may be a task of cleaning up the surface of the inner reservoir 102. In the second polishing step S700, a surface roughness of the inner reservoir may be homogenized. In the second polishing step S700, the sandpaper may be changed so that the grit of the sandpaper increases.

As an embodiment, in an initial stage of the second polishing step S700, sandpaper having the grit of 150 may be used, and in a middle stage of the second polishing step S700, sandpaper having a grit of 180 may be used. Further, in a latter stage of the second polishing step S700, the polishing task may be performed by the polishing process.

Then, an electrolyte polishing step S800 is performed.

The electrolyte polishing step S800 may be performed by a scheme of immersing the inner reservoir 102 in an electrolyte solution and allowing current to flow in the electrolyte solution.

The inner reservoir 102 that undergoes the electrolyte polishing step S800 may have improved surface roughness or glossiness. The inner reservoir 102 that undergoes the electrolyte polishing step S800 may have improved corrosion resistance.

Then, a hairline polishing step S900 is performed.

In the hairline polishing step S900, continuous fine stripes may be formed on the surface of the inner reservoir 102.

Then, a marking step S1000 is performed. The outer peripheral surface or inner peripheral surface of the inner reservoir 102 may be marked with required information. In the marking step S1000, a laser may be used.

## Claims

1. A method for manufacturing a water tank mounted on a humidifier, the method comprising:
producing an upper cylinder (S100) of a water tank;
producing a lower cap (S200) of the water tank;
welding (S300) the upper cylinder and the lower cap;
a first polishing step (S500) using sandpaper having a first grit range; and
a second polishing step (S700) using sandpaper having a second grit range larger than the first grit range.

2. The method for manufacturing a water tank of claim 1, wherein the water tank is formed of stainless steel.

3. The method for manufacturing a water tank of claim 1, or 2, wherein the first polishing step (S500) uses sandpaper having a grit size in the range of 100 to 150.

4. The method for manufacturing a water tank of claim 1, 2, or 3, wherein the first polishing step (S500) comprises changing the sandpaper in a direction of increasing grit size.

5. The method for manufacturing a water tank of any one of claims 1 to 4, wherein the first polishing step (S500) comprises removing the bead from welding portion of the upper cylinder and the lower cap.

6. The method for manufacturing a water tank of any one of claims 1 to 5, wherein in the second polishing step (S700) comprises changing the sandpaper in a direction of increasing grit size.

7. The method for manufacturing a water tank of any one of claims 1 to 6, wherein the second polishing step (S700) uses sandpaper with a grit size of 150 to 240.

8. The method for manufacturing a water tank of claim 7, wherein the second polishing step (S700) further includes a polishing process of using fine sandpaper of 600 grit or more.

9. The method for manufacturing a water tank of any one of claims 1 to 8, further comprising:
an electrolyte polishing step (S800) of immersing the water tank in an electrolyte solution and allowing current to flow in the electrolyte solution after the second polishing step.

10. The method for manufacturing a water tank of claim 9, further comprising:
a hairline polishing step (S900) of forming fine stripes on a surface of the water tank (100), after the electrolyte polishing step.

11. The method for manufacturing a water tank of any one of claims 1 to 10, further comprising:
a first processing step (S400) of expanding the upper cylinder part, and cutting an upper end portion of the upper cylinder, after the welding of the upper cylinder and the lower cap.

12. The method for manufacturing a water tank of any one of claims 1 to 11, further comprising:
a second processing step (S600) of adding a bead shape for reinforcing a strength to the upper end portion of the upper cylinder, after the first polishing step.

13. The method for manufacturing a water tank of any one of claims 1 to 12, wherein the step of producing the lower cap includes a process of forming the bottom surface of the lower cap.

14. The method for manufacturing a water tank of any one of claims 1 to 13, wherein a length of the upper cylinder is formed to be greater than a diameter of the lower cap.

15. The method for manufacturing a water tank of any one of claims 1 to 14, wherein in the producing of the upper cylinder (S100) comprises rolling a stainless steel plate into a cylindrical pipe, and welding butted portions.
